# DEMANDE DE BREVET EUROPEEN

(11) **EP 3 530 991 A1**
(43) Date de publication de la demande: **28.08.2019**
(21) Numéro de dépôt: 18157922.8
(22) Date de dépôt: 21.02.2018
(51) Int. Cl.: F16H 59/02

(54) **LEVIER DE COMMANDE D'UNE BOITE DE VITESSE AVEC GACHETTE DE MARCHE ARRIERE AMORTIE**

(71) Demandeur: DURA Automotive Holdings U.K., Ltd., Birmingham, B35 7AG (GB)
(72) Inventeur: GOMES, Adrien, 78450 Villepreux (FR); MIRAULT, Bertrand, 91160 Saulx les Chartreux (FR); DEVAUCHELLE, Frédéric, 78170 La Celle Saint Cloud (FR)
(74) Mandataire: Cabinet Laurent & Charras

(57) **Abrégé**

L'invention concerne un levier (10) de commande pour le passage et la sélection des vitesses d'une boîte de vitesses manuelle d'un véhicule automobile, le levier (10) étant équipé d'une gâchette (20) de marche arrière destinée à être coulissée le long du levier (10) entre une position soulevée autorisant le passage de la marche arrière, et une position relâchée interdisant le passage de la marche arrière, en butée contre une partie (15) du levier (10) ou de la boîte de vitesse, le levier (10) comprenant des moyens (30) d'amortissement disposés entre la gâchette (20) et la partie (15) contre laquelle la gâchette (20) est destinée à venir buter.

Selon l'invention, les moyens (30) d'amortissement se présentent sous la forme d'une pièce (31) en plastique conformée pour assurer l'amortissement.

## Description

### DOMAINE TECHNIQUE

L'invention se rattache au secteur technique des boîtes de vitesses mécaniques, c'est-à-dire à commande manuelle, pour véhicules automobiles.

Plus particulièrement, l'invention concerne un levier de commande pour le passage et la sélection des vitesses d'une boîte de vitesses mécaniques, équipé d'une gâchette de marche arrière.

### ART ANTERIEUR

Dans l'état de la technique, il est connu un levier de commande monté pivotant autour d'une articulation dans une boîte de vitesses mécaniques d'un véhicule automobile. Pour empêcher l'engagement involontaire du rapport de marche arrière, le levier de commande comprend, d'une manière connue, une gâchette actionnable par le conducteur pour permettre la sélection et le passage du rapport de marche arrière.

Par exemple, la gâchette permet de faire coulisser un doigt monté autour du levier entre une position soulevée autorisant le passage de la marche arrière, et une position relâchée interdisant le passage de la marche arrière, en butée contre une partie du levier ou de la boîte de vitesse.

L'inconvénient qui résulte de cet état de la technique est que, lorsque la gâchette est relâchée, celle-ci bute relativement fortement contre la butée ce qui engendre un bruit inconfortable et non désiré.

Pour résoudre ce problème, il est connu du document GB 2 347 181 que le levier comprenne une bague en caoutchouc disposée entre la gâchette et la partie contre laquelle la gâchette est destinée à venir buter, afin d'atténuer le choc et de réduire le bruit.

Cette solution permet de réduire, voire de supprimer le bruit inconfortable, mais peut largement être améliorée en termes de conception, de fiabilité dans le temps, et de coût.

### EXPOSE DE L'INVENTION

L'un des buts de l'invention est donc de proposer un levier de commande pour le passage et la sélection des vitesses d'une boîte de vitesses manuelle d'un véhicule automobile, équipé d'une gâchette de marche arrière dont la nuisance est réduite, tout en présentant une conception simple et économique.

Afin de résoudre les problèmes précités, il a été mis au point un levier de commande pour le passage et la sélection des vitesses d'une boîte de vitesses manuelle d'un véhicule automobile. De façon connue, le levier est équipé d'une gâchette de marche arrière destinée à être coulissée le long du levier entre une position soulevée autorisant le passage de la marche arrière, et une position relâchée interdisant le passage de la marche arrière, en butée contre une partie du levier ou de la boîte de vitesse. Le levier comprend des moyens d'amortissement disposés entre la gâchette et la partie contre laquelle la gâchette est destinée à venir buter.

Selon l'invention les moyens d'amortissement se présentent sous la forme d'une pièce en plastique conformée pour assurer l'amortissement.

De cette manière, le levier selon l'invention est moins complexe et plus économique. De plus, la durée de vie de l'amortissement est plus longue. En effet, contrairement à la bague en caoutchouc de l'état de la technique dont l'élasticité diminue tout au long de la durée de vie, notamment du fait du vieillissement, la pièce en plastique conserve ses propriétés d'amortissement et est plus fiable dans le temps.

Selon des formes de réalisation particulière, et dans un but de simplification de la fabrication et de diminution des coûts associés, la pièce en plastique peut former partie intégrante avec la gâchette ou directement avec la partie contre laquelle la gâchette est destinée à venir buter.

Cette caractéristique permet également de faciliter le stockage, le montage et la manutention du levier car il possède moins de pièces.

Selon une forme de réalisation particulière, la conformation assurant l'amortissement est réalisée par une languette formant un ressort à lame prolongeant la pièce en plastique. Selon une autre forme de réalisation, la pièce en plastique comprend une ouverture latérale ménagée à proximité du bord de la pièce et définissant une portion de paroi d'extrémité élastiquement déformable en regard de la partie formant butée.

De cette manière, lorsque la gâchette est relâchée, c'est ladite portion de paroi d'extrémité élastiquement déformable qui vient buter contre la partie formant butée pour amortir le choc et réduire, voire supprimer le bruit.

Par exemple, l'ouverture latérale comprend une forme sensiblement triangulaire avec un sommet orienté vers la partie formant butée.

De préférence, pour faciliter davantage la conception du levier de commande, la partie formant butée est surmoulée directement sur ledit levier.

Selon une forme de réalisation particulière, la gâchette est prolongée par au moins un élément coaxial au levier pour former un rail de guidage du coulissement de la gâchette. La partie formant butée présente un doigt en saillie radialement et en coopération avec le rail pour guider le coulissement de la gâchette.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une vue de côté du levier de commande selon l'invention ;
- la figure 2 est une vue en perspective du levier avec la gâchette en position soulevée ;
- la figure 3 est une vue en perspective du levier avec la gâchette en position relâchée et en butée contre la partie formant butée.

### EXPOSE DETAILLE DE L'INVENTION

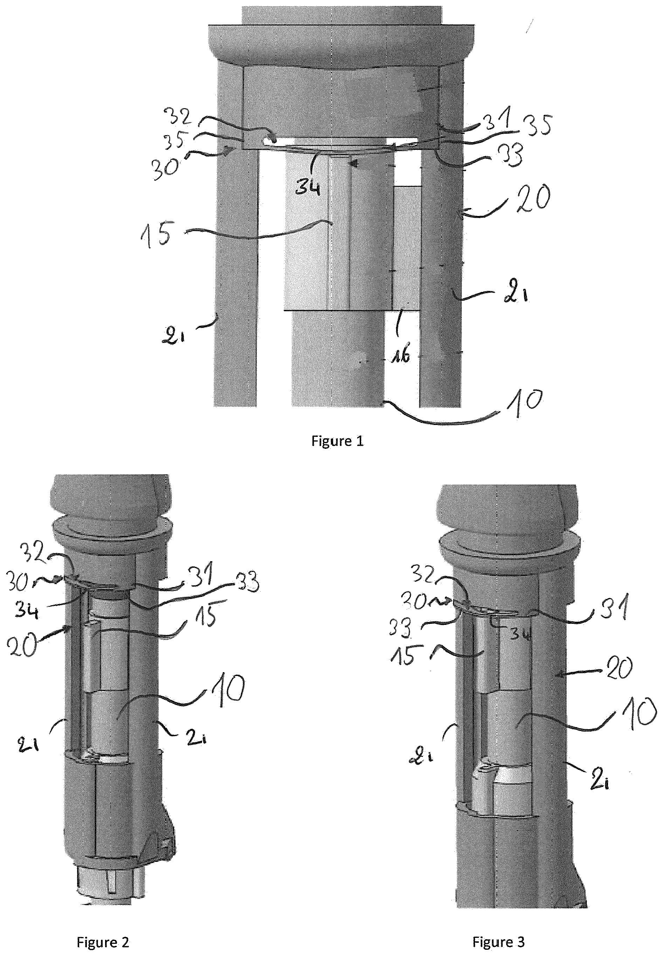

En référence aux figures 1 à 3, l'invention concerne un levier (10) de commande pour le passage et la sélection des vitesses d'une boîte de vitesses manuelle d'un véhicule automobile.

Le levier (10), par exemple en métal, est équipé d'une gâchette (20) de marche arrière destinée à être coulissée le long du levier (10) entre une position soulevée (figure 2) autorisant le passage de la marche arrière, et une position relâchée (figures 1 et 3) interdisant le passage de la marche arrière, en butée contre une partie (15) du levier (10) ou de la boîte de vitesse.

Dans l'exemple illustré aux figures, la partie (15) est en plastique et est surmoulée autour du levier (10). Plus précisément, la gâchette (20) est prolongée vers le bas par au moins un élément (21), et de préférence deux éléments (21) diamétralement opposés, coaxiaux au levier (10) pour former au moins un rail de guidage du coulissement de la gâchette (20). La partie (15) formant butée présente un doigt (16) en saillie radialement et en coopération avec le rail pour guider le coulissement de la gâchette (20).

De façon connue, l'interdiction du passage de la marche arrière est réalisé par un obstacle complémentaire (non-représenté), par exemple une rampe, contre laquelle la gâchette (20) vient buter en position relâchée pour empêcher la sélection et l'engagement de la marche arrière. Lorsque la gâchette (20) est soulevée, elle peut franchir l'obstacle et autoriser la sélection et le passage de la marche arrière.

Le levier (10) comprend des moyens (30) d'amortissement disposés entre la gâchette (20) et la partie (15) contre laquelle la gâchette (20) est destinée à venir buter en position relâchée. Selon l'invention, les moyens (30) d'amortissement se présentent sous la forme d'une pièce (31) en plastique conformée pour assurer l'amortissement.

De préférence, la pièce (31) en plastique forme partie intégrante avec la gâchette (20). Autrement dit, la gâchette (20) et la pièce (31) sont monobloc, la gâchette (20) étant directement prolongée, en regard de la partie (15), par la pièce (31). De cette manière, la conception est simple et économique.

La pièce (31) en plastique comprend une ouverture (32) latérale, ménagée à proximité du bord (33) de la pièce (31) pour définir une portion (34) de paroi d'extrémité élastiquement déformable en regard de la partie (15) formant butée.

Plus précisément, l'ouverture (32) latérale comprend une forme sensiblement triangulaire avec un sommet orienté vers la partie (15) formant butée. Ainsi la pièce (31) en plastique présente des zones affaiblies (35) afin de provoquer la déformation élastique de la pièce (31), et également de la portion (34) de paroi d'extrémité élastiquement déformable lorsqu'elle entre en contact avec la partie (15) formant butée. Autrement dit, la pièce (31) en plastique présente une élasticité du fait de sa conformation, et non pas du fait de sa matière comme dans l'état de la technique. Ainsi, la durée de vie de l'amortissement est très largement augmentée, la pièce (31) ne perd pas ses propriétés élastiques en vieillissant.

La partie (15) formant butée présente une section réduite afin de définir une zone de contact localisée avec la pièce (31) en plastique et augmenter le phénomène de déformation élastique de la portion (34) de paroi d'extrémité élastiquement déformable, et donc de diminuer davantage le bruit du choc entre les deux pièces.

Ainsi lorsque la gâchette (20) en position soulevée est relâchée, la force de contact entre la gâchette (20) et la partie (15) formant butée augmente progressivement, évitant ainsi le choc et le bruit.

La pièce (31) peut être confirmée autrement sans sortir du cadre de l'invention. Par exemple, en variante non représentée, la pièce (31) peut être prolongée par une languette formant un ressort à lame pour l'amortissement.

En outre, les caractéristiques techniques des différents modes de réalisation et variantes mentionnés ci-dessus peuvent être, en totalité ou pour certains d'entre eux, combinés entre eux.

Il ressort de ce qui précède que l'invention fournit bien un levier (10) de commande pour le passage et la sélection des vitesses d'une boîte de vitesses manuelle d'un véhicule automobile, équipé d'une gâchette (20) de marche arrière, dont la nuisance est réduite, tout en présentant une conception simple, fiable et économique.

## Revendications

1. Levier (10) de commande pour le passage et la sélection des vitesses d'une boîte de vitesses manuelle d'un véhicule automobile, le levier (10) étant équipé d'une gâchette (20) de marche arrière destinée à être coulissée le long du levier (10) entre une position soulevée autorisant le passage de la marche arrière, et une position relâchée interdisant le passage de la marche arrière, en butée contre une partie (15) du levier (10) ou de la boîte de vitesse, le levier (10) comprenant des moyens (30) d'amortissement disposés entre la gâchette (20) et la partie (15) contre laquelle la gâchette (20) est destinée à venir buter, ***caractérisé* en ce que** les moyens (30) d'amortissement se présentent sous la forme d'une pièce (31) en plastique conformée pour assurer l'amortissement.

2. Levier (10) selon la revendication 1, ***caractérisé* en ce que** la pièce (31) en plastique forme partie intégrante avec la gâchette (20).

3. Levier (10) selon la revendication 1, ***caractérisé* en ce que** la pièce (31) en plastique forme partie intégrante avec la partie (15) contre laquelle la gâchette (20) est destinée à venir buter.

4. Levier (10) selon la revendication 1, ***caractérisé* en ce que** la pièce (31) en plastique comprend une ouverture (32) latérale ménagée à proximité du bord (33) de la pièce (31) et définissant une portion (34) de paroi d'extrémité élastiquement déformable en regard de la partie (15) formant butée.

5. Levier (10) selon la revendication 4, ***caractérisé* en ce que** l'ouverture (32) latérale comprend une forme sensiblement triangulaire avec un sommet orienté vers la partie (15) formant butée.

6. Levier (10) selon la revendication 1, ***caractérisé* en ce que** la partie (15) formant butée est surmoulée sur le levier (10).

7. Levier (10) selon la revendication 1, ***caractérisé* en ce que** la gâchette (20) est prolongée par au moins un élément (21) coaxial au levier (10) pour former un rail de guidage du coulissement de la gâchette (20), la partie (15) formant butée présente un doigt (16) en saillie radialement et en coopération avec le rail pour guider le coulissement de la gâchette (20).
